Europäisches Patentamt

(19) European Patent Office

Office européen des brevets

(11) Veröffentlichungsnummer: **0 215 140**
**B1**

(12) **EUROPÄISCHE PATENTSCHRIFT**

(45) Veröffentlichungstag der Patentschrift:
**26.04.89**

(51) Int. Cl.⁴: **G01L 9/00**, G01L 9/06

(21) Anmeldenummer: **85111457.9**

(22) Anmeldetag: **11.09.85**

(54) **Drucksensor.**

(43) Veröffentlichungstag der Anmeldung:
**25.03.87 Patentblatt 87/13**

(45) Bekanntmachung des Hinweises auf die Patenterteilung:
**26.04.89 Patentblatt 89/17**

(84) Benannte Vertragsstaaten:
**AT BE CH DE FR GB IT LI LU NL SE**

(56) Entgegenhaltungen:
**EP-A- 0 126 989**
**EP-A- 0 135 653**
**EP-A- 0 140 992**
**EP-A- 0 145 001**
**DE-A- 3 125 640**
**DE-A- 3 313 260**
**DE-A- 3 313 261**

**Prospekt KMK-SENSORTECHNIK Sensor Systems for the Automation**

(73) Patentinhaber: **Kunz, Manfred, Am Wiesenhang 4, D-8121 Aidenried/Ammersee(DE)**

(72) Erfinder: **Kunz, Manfred, Dipl.-Kfm., Am Wiesenhang 4, D-8121 Aidenried(DE)**
Erfinder: **Binder, Josef, Dr. rer. nat., Staltacher Strasse 12 B, D-8127 Iffeldorf(DE)**

(74) Vertreter: **Säger, Manfred, Dipl.-Ing. et al, Lesser, Flügel & Säger Patentanwälte Richard-Strauss-Strasse 56 Postfach 81 05 40, D-8000 München 80(DE)**

**Beschreibung**

Die Erfindung betrifft einen Drucksensor gemäß dem Oberbegriff des Hauptanspruchs.

Solche in Druckgeber eingebaute Drucksensoren sind bekannt (Prospekt ohne Datum der Firma KMK in 8122 Penzberg (DE), Sensoren und Meßwert-Verarbeitungssysteme für die Industrie). Sie besitzen ein aus Edelstahl bestehendes metallisches Gehäuse in Form eines mit einem Außengewinde und einem Sechskant versehenen Einschraubbolzens, an dessen Vorderseite die Trennmembran des mit einem Fluid gefüllten Druckraums angebracht ist, in welchem der Drucksensorchip angeordnet ist. Dieser ist in dem abgeschlossenen Druckraum durch elektrisch über Glas isoliert hineingeführte Anschlüsse an die im rückwärtigen (äußeren) Teil des Drucksensors angeordnete Auswertschaltung angeschlossen, wobei der Drucksensorchip auf einem Glassockel angeordnet ist, wodurch zur Füllung des Druckraums vergleichsweise viel Fluid erforderlich ist.

Bei Temperaturveränderungen ergeben sich durch den Glassockel Temperaturfehler. Der Erfindung liegt die Aufgabe zugrunde, einen gattungsgemäßen Drucksensor einfacher herstellbar sowie störunanfälliger und mit größerer Genauigkeit zur Verfügung zu stellen.

Diese Aufgabe wird bei einem gattungsgemäßen Drucksensor gemäß dem Oberbegriff des Hauptanspruchs erfindungsgemäß durch dessen kennzeichnende Merkmale gelöst.

Nach der erfindungsgemäßen Lehre kann die Trägerplatte nicht nur als Füllkörper im Druckraum dienen, so daß weniger Fluid als beim Stand der Technik erforderlich ist, sondern es ergibt sich in vorteilhafter Weise infolge der geringeren Füllung, daß Temperatureinflüsse auf das Meßergebnis gering bleiben. Dies gilt umso mehr, weil die Trägerplatte aus dem Aluminiumnitrid (AlN) praktisch denselben thermischen Ausdehnungskoeffizienten wie der Drucksensorchip aufweist, thermische Spannungen also zwischen dem Chip und der Trägerplatte, die die Genauigkeit des Drucksensors beeinträchtigen, nicht auftreten können. Infolgedessen kann der Drucksensorchip auch nahezu ganzflächig mit der Trägerplatte verbunden werden. Hierdurch bedingt wird auch verhindert, daß dynamische Drücke den Drucksensorchip von der Trägerplatte absprengen können. Hinzu kommt, daß die Trägerplatte mit dem aufgelöteten Drucksensorchip als vormontier- sowie abgleichbares Montageteil hergestellt und danach erst in das Gehäuse des Druckgebers eingesetzt sowie lediglich die in den Druckraum hineingeführten Anschlüsse an den auf der Trägerplatte vorgesehenen Leiterbahnen, die die Bohrungen für die Anschlüsse aufweisen, festgelötet werden müssen, wodurch nicht nur die mechanische Verankerung der Trägerplatte, sondern auch der elektrische Anschluß des Drucksensorchips zugleich bewerkstelligt wird. Ein kompliziertes störunanfälliges, nachträgliches Bonden wie beim Stand der Technik entfällt. Diese vorstehend genannten Vorteile sind insbesondere bei einem im Hochdruckbereich arbeitenden Drucksensor nach der Erfindung vorhanden.

Aber auch bei im Niederdruckbereich arbeitenden Drucksensoren gelten diese Vorteile. Zur Erfassung des Niederdruckbereichs wird die Vorderseite des Drucksensorchips mit dem zu messenden Druck über die das Fluid und seine Rückseite mit einem Referenzdruck beaufschlagt, der über ein Röhrchen zugeführt wird. Hierzu weist die Trägerplatte auf ihrer dem Drucksensorchip entgegengesetzten Unterseite eine Metallisierung auf und ist in diesem Bereich eine von der Unterseite zur Oberseite der Trägerplatte reichende Durchgangsöffnung vorgesehen, wobei das Röhrchen an der Metallisierung der Unterseite der Trägerplatte druckdicht angelötet ist. Selbstverständlich ist auch der Drucksensorchip umlaufend geschlossen, d.h. druckdicht auf der Trägerplatte festgelötet.

Insgesamt ergibt sich also ein einfach und billig herstellbarer, störunanfälliger sowie mit besserer Genauigkeit arbeitender Drucksensor.

Zweckmäßige Ausgestaltungen und Weiterbildungen der Erfindung sind in den Unteransprüchen gekennzeichnet. So können vier (in Draufsicht) rechteckförmige metallische Bereiche vorgesehen, die eine quadratische Fläche aufspannen, die größer als jene des quadratischen Drucksensorchips ist, wobei die beiden Erstreckungsrichtungen der Seiten aller vier rechteckförmigen metallischen Bereiche den mechanisch unwirksamen Richtungen des aufgelöteten anisotropen Drucksensorchips entspricht. Mechanische Spannungen der Trägerplatte übertragen sich infolgedessen nicht auf den Drucksensorchip.

Nachdem der Drucksensorchip direkt auf die Trägerplatte aufgelötet ist, ergibt sich eine geringe Bauhöhe und dadurch bedingt weniger Fluid, wodurch auch dynamische Drücke gut zu messen sind. Wird darüber hinaus an der Trägerplatte gleich welchen Umrisses ein zumindest teilweise umlaufender Randsteg vorgesehen, so können auch stärkste Drücke, bei denen sich die Membran durchbiegt, nicht den Drucksensorchip zerstören, weil die Membran auf dem umlaufenden Randsteg zur Anlage kommt.

Wird ferner eine Metallspinne bei der Trägerplatte vorgesehen, so kann eine automatische Montage erfolgen. Außerdem werden Testmessungen des Chips möglich, so daß dessen Charakteristika festleg- und beeinflußbar sind, weil gegebenenfalls Abgleich- und/oder Temperaturkompensation-Widerstände mit auf der Trägerplatte aufgebracht werden können. Bei Ausschuß der Trägerplatte mit dem Chip ergibt sich nur ein geringer Verlust.

Schließlich kann in dem Druckraume ein zusätzlicher Füllkörper mit negativem Ausdehnungskoeffizient zur Temperaturkompensation vorgesehen sein, wodurch ein Höchstmaß an Genauigkeit erzielbar ist.

Ein bevorzugtes Ausführungsbeispiel der Erfindung wird nachfolgend unter Bezugnahme auf die Zeichnung näher erläutert. Diese zeigt:

Figur 1 einen Drucksensor, im teilweise ausgebrochenen schematischen Längsschnitt;

Figur 2 die Trägerplatte mit dem Drucksensor gemäß Figur 1, in Draufsicht;

Figur 3 einen Schnitt III-III gemäß Figur 1 und

Figur 4 eine zu Figur 1 alternative Ausführungsform eines Drucksensors für den Niederuckbereich.

Der insgesamt mit 5 bezeichnete Drucksensor weist ein metallisches Gehäuse 6, vorzugsweise aus Edelstahl auf und ist an seinem einen Ende mit einem Außensechskant 7 sowie einem Außengewinde 8 nach Art eines einschraubbaren Bolzens versehen. An den Drucksensor kann direkt auf der dem Außengewinde 8 mit Bezug auf den Außensechskant 7 gegenüberliegenden Bereich 9 eine gekapselte elektrische Auswerteschaltung (nicht gezeigt) zur Bildung eines fertigen Druckgebers angeschlossen werden.

Im Vorderbereich weist der Drucksensor 5 eine Trennmembran 10 auf, die einen von der Außenseite 12 abgetrennten und mit Fluid gefüllten Druckraum 11 definiert. Der der Trennmembran 10 gegenüberliegende Boden des Druckraums 11 wird von einer insgesamt mit 13 bezeichneten Trägerplatte gebildet, die den eigentlichen Drucksensorchip 14 aus einem piezoelektrisch wirksamen, anisotropen Halbleitermaterial trägt. Die seitliche Begrenzung des Druckraumes 11 kann durch einen aufgesetzten Ring 15 gebildet sein, der mit dem Gehäuse 6 fest, beispielsweise durch Schweißen, verbunden ist.

Die Trägerplatte 13 und der angrenzende Bereich des Gehäuses 6 sind mit Durchführungen 16 versehen, durch die druckdicht und von dem metallischen Gehäuse 6 über eine elektrische Glasisolation 17 insgesamt mit 18 bezeichnete metallische Durchführungen hineingeführt sind, die zu einer  elektrischen Auswertschaltung führen (nicht gezeigt). Die Trägerplatte 13 mit dem Drucksensorchip 14 wird mechanisch und elektrisch in einfacher Weise mit den Leiterstäben 18 durch eine Lötung 19 verbunden.

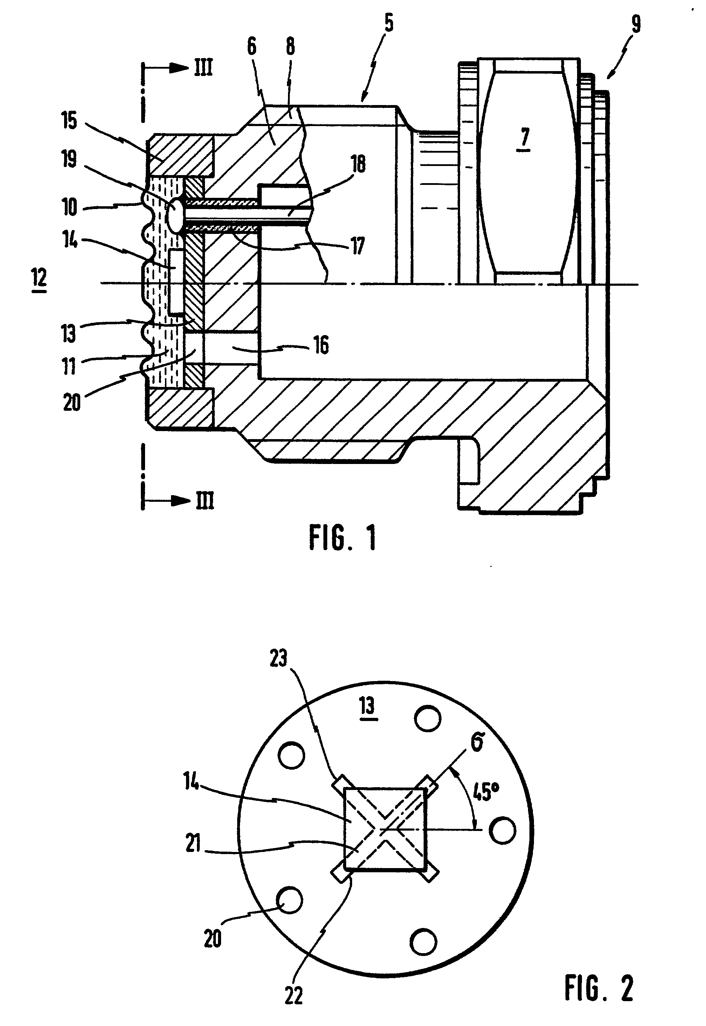

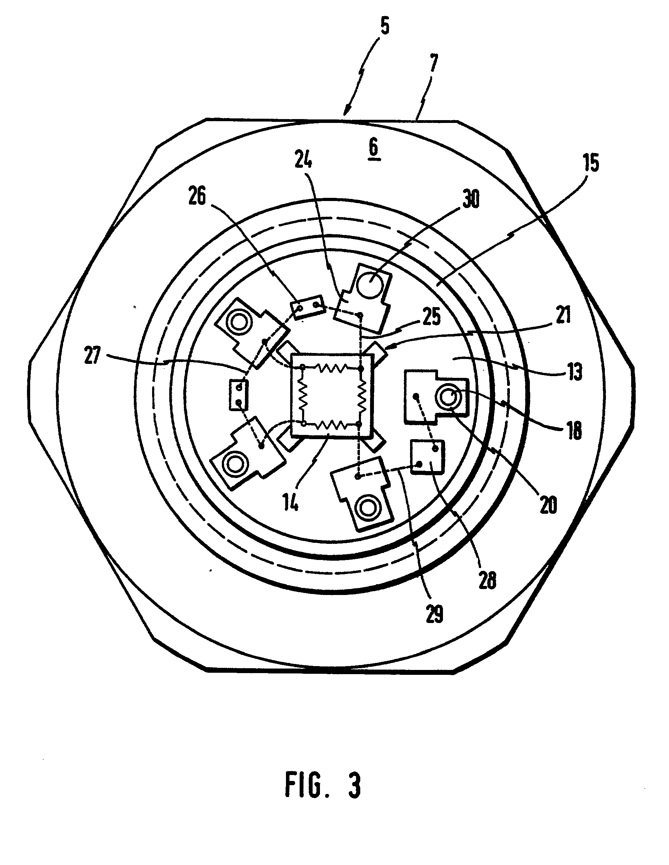

Figur 2 zeigt eine schematische Draufsicht auf die Trägerplatte 13, die aus Aluminiumnitrid (AIN) besteht, welches in etwa denselben thermischen Ausdehnungskoeffizienten wie der Drucksensorchip 14 aufweist, so daß bei thermischer Ausdehnung infolge fehlender Verspannung zwischen den beiden Teilen keine Fehler auftreten können. Ferner weist die Trägerplatte 13 zirkular um den Drucksensorchip 14 herum angeordnete Bohrungen 20 für die Durchführung 16 des Drucksensors 5 (Figur 1) sowie auf der Oberfläche metallisierte Bereiche 21 auf, an denen der in Draufsicht quadratische Drucksensorchip 14 angelötet ist.

Es sind insgesamt vier gleich große metallisierte Bereiche 21 vorgesehen, von denen jeder in Draufsicht rechteckförmig ausgebildet und die zueinander sternsymmetrisch um ein Zentrum angeordnet sind, wobei die Langseiten 22 jedes rechteckförmigen metallischen Bereichs 21 auf dieses Zentrum ausgerichtet sind. Alle vier rechteckförmigen metallischen Bereiche spannen eine gedachte quadratische Fläche auf, die größer als jene des quadratischen Drucksensorchips 14 ist. Hierbei entsprechen die beiden Erstreckungsrichtungen der Langseiten 22 und der Schmalseiten 23 aller vier rechteckförmigen metallischen Bereiche den mechanisch unwirksamen Richtungen des aufgelöteten anisotropen Drucksensorchips 14, wobei, wie aus den gestrichelten Linien ersichtlich, sich die vier metallisierenden Bereiche berühren und im Zentrum ineinander übergehen.

Figur 3 zeigt die teilweise an die metallischen Durchführungen 18 angelötete Trägerplatte 13 mit elektrisch angeschlossenem Drucksensorchip 14, der auf die metallisierten Bereiche 21 aufgelötet ist. Hierbei weist die Oberseite der Trägerplatte 13 Leiterbahnen 24 auf, in denen die Bohrungen 20 der Trägerplatte 13 münden. An diesen Leiterbahnen 24 sind durch Bonden, schematisch mit 25 bezeichnet, sowohl der Drucksensorchip 14 als auch Abgleichwiderstände 26, ebenfalls schematisch mit 27 bezeichnet, gegebenenfalls noch eine Temperaturkompensationsschaltung 28 mittels Bondanschlüssen 29 elektrisch verbunden. Die solchermaßen vorgefertigten bzw. vormontierte und abgeglichene Trägerplatte 13 wird dann in den Druckraum 11 des Drucksensors 5 eingesetzt. Die Leiterstäbe 18 stehen hierbei über die Oberfläche der Trägerplatte 13 vor. Durch Herstellung einer Lötverbindung 30 wird die Trägerplatte 13 sowohl mechanisch als auch elektrisch festgelegt bzw. angeschlossen.

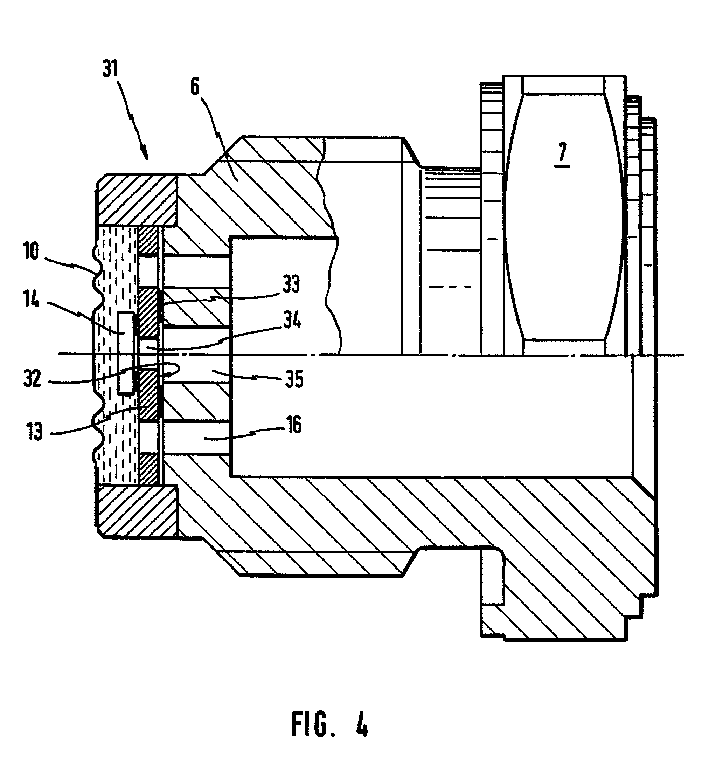

Figur 4 zeigt eine weitere Ausführungsform 31 für einen Drucksensor, und zwar im Gegensatz zu der Ausführungsform gemäß Figur 1 nicht für den Hochdruck- sondern den Niederdruckbereich. Die beiden Ausführungsformen entsprechen sich weitestgehend. Gleiche Teile sind daher auch zum Teil mit gleichen Bezugzeichen versehen.

Wesentlicher Unterschied bei dieser alternativen Ausführungsform ist jedoch, daß die Trägerplatte 13 auf ihrer der Oberseite mit dem Drucksensorchip 14 entgegengesetzten Unterseite 32 ebenfalls eine Metallisierung 33 vorgesehen ist. In diesem Bereich ist auch eine Durchgangsöffnung 34 von der Ober- zur Unterseite 32 der Trägerplatte 13 vorhanden, die mit einer Durchgangsbohrung 35 in dem Gehäuse 6 des Drucksensors 31 in Verbindung steht. Die metallischen Bereiche 33 auf der Unterseite sind entweder an ein Röhrchen (nicht gezeigt) oder aber an das Gehäuse 6, in jedem Falle aber druckdicht um die Durchgangsbohrung 35 und die Durchgangsöffnung 34 herum gasdicht angelötet, so daß über 34, 35 ein Referenzdruck auf die Unterseite des Drucksensorchips 14 geleitet werden kann.

**Patentansprüche**

1. Drucksensor, mit einem metallischen Gehäuse (6, 15), mit einem mit einem Fluid gefüllten, abgeschlossenen Druckraum (11), mit einer diesen vom Außenbereich abtrennenden und dessen Druck auf das Fluid übertragenden Trennmembran (10), mit einem in dem Druckraum (11) angeordneten, dem Druck des Fluids ausgesetzten Drucksensorchip (14) aus einem Halbleitermaterial, das einen piezoresistiven, anisotropen Effekt aufweist, und mit in den Druckraum (11) druckdicht und von dem metallischen Gehäuse (6, 15) elektrisch isoliert hineingeführten Anschlüssen (18), die an eine elektrische Auswertschaltung anschließbar sind, wobei der Drucksensorchip (14) durch Bonden elektrisch angeschlossen ist, dadurch gekennzeichnet, daß eine Trägerplatte (13) aus Aluminiumnitrid vorgesehen ist, auf der der Drucksensorchip (14) zumindest über einen metallisierten Bereich (21) aufgelötet ist.

2. Drucksensor nach Anspruch 1, dadurch gekennzeichnet, daß vier gleich große metallisierte Bereiche (21) vorgesehen sind, daß jeder Bereich in Draufsicht rechteckförmig ist und daß die vier metallischen Bereiche zueinander sternsymmetrisch um ein Zentrum angeordnet sind.

3. Drucksensor nach Anspruch 2, dadurch gekennzeichnet, daß die Langseiten jedes rechteckförmigen metallischen Bereichs der Trägerplatte (13) auf das Zentrum ausgerichtet sind.

4. Drucksensor nach Anspruch 2 oder 3, dadurch gekennzeichnet, daß die vier rechteckförmigen metallisierten Bereiche (21) eine gedachte quadratische Fläche aufspannen, die größer als jene des quadratischen Drucksensorchips (14) ist.

5. Drucksensor nach Anspruch 3, dadurch gekennzeichnet, daß die beiden Erstreckungsrichtungen der Längsseiten (22) und der Schmalseiten (23) der rechteckförmigen metallisierten Bereiche (21) den mechanisch unwirksamen Richtungen des aufgelöteten, anisotropen Drucksensorchips (14) entspricht.

6. Drucksensor nach einem der Ansprüche 1 bis 5, dadurch gekennzeichnet, daß sich die vier metallisierten Bereiche (21) berühren.

7. Drucksensor nach einem der Ansprüche 1 bis 6, dadurch gekennzeichnet, daß die Trägerplatte (13) Leiterbahnen (24) zum elektrischen Anschluß an den Sensorchip (14), die Leiterstäbe (18) sowie gegebenenfalls Abgleichwiderstände (26) und/oder eine Temperaturkompensationsschaltung (28) aufweist.

8. Drucksensor nach einem der Ansprüche 1 bis 7, dadurch gekennzeichnet, daß die Trägerplatte für die zirkular angeordneten Anschlüsse (18) ebenfalls entsprechend zirkular angeordnete Bohrungen (20) aufweist, über die die Anschlüsse beim Einsetzen hervorstehen.

9. Drucksensor nach Anspruch 8, dadurch gekennzeichnet, daß die Bohrungen im Bereich der Leiterbahnen (24) angeordnet sind.

10. Drucksensor nach Anspruch 9, dadurch gekennzeichnet, daß die Bohrungen (20) vollständig von Leiterbahnen (24) umgeben sind.

11. Drucksensor nach einem der Ansprüche 1 bis 10, dadurch gekennzeichnet, daß die Trägerplatte (13) mit dem bis auf die Auswertschaltung elektrisch angeschlossenen Drucksensorchip (14) sowie gegebenenfalls Abgleichwiderständen (26) und/oder einer Temperaturkompensationsschaltung (28) als fertiges, getestetes, sowie abgeglichenes Montageteil in den Drucksensor (5, 31) eingebaut wird.

12. Drucksensor nach Anspruch 11, dadurch gekennzeichnet, daß das fertige Montageteil mit den Bohrungen (20) auf die Anschlüsse (18) aufgesetzt und deren überstehende Bereiche mit den Leiterbahnen (24) verlötet werden.

13. Drucksensor nach Anspruch 11 oder 12, dadurch gekennzeichnet, daß die Trägerplatte (13) mit einer Metallspinne versehen ist.

14. Drucksensor nach einem der Ansprüche 1 bis 13, dadurch gekennzeichnet, daß die Trägerplatte (13) kreisrund ausgebildet ist und einen über die Höhe des Drucksensors (14) überstehenden, umlaufenden Randsteg aufweist.

15. Drucksensor nach einem der Ansprüche 1 bis 14, dadurch gekennzeichnet, daß die Trägerplatte auf ihrer dem Drucksensorchip (14) entgegengesetzten Unterseite (32) eine Metallisierung (33) aufweist und in diesem Bereich eine von der Unterseite (32) zur Oberseite der Trägerplatte (13) reichende Durchgangsöffnung (34) vorgesehen ist.

16. Drucksensor nach Anspruch 15, dadurch gekennzeichnet, daß an der Metallisierung (33) der Unterseite (32) der Trägerplatte (13) ein Röhrchen gasdicht, die Durchgangsöffnung (34) umfassend angelötet ist, welches mit einem Referenzdruck beaufschlagbar ist.

17. Drucksensor nach Anspruch 15, dadurch gekennzeichnet, daß die Trägerplatte (13) mit ihrer Metallisierung (33) an der Unterseite (32) an dem Gehäuse (6), die Durchgangsöffnung (34) umfassend gasdicht angelötet ist, die mit einer Durchgangsbohrung (35) in dem Gehäuse (6) in Verbindung steht.

18. Drucksensor nach einem der Ansprüche 15 bis 17, dadurch gekennzeichnet, daß die Durchgangsöffnung (34) auf der Oberseite der Trägerplatte (13) unter dem Drucksensorchip (14) mündet, der umlaufend an die Oberseite der Trägerplatte (13) angelötet ist.

19. Drucksensor nach einem der Ansprüche 1 bis 18, dadurch gekennzeichnet, daß auf der Trägerplatte (13) Füllkörper mit einem thermischen Ausdehnungskoeffizienten angeordnet sind, der kleiner oder höchstens gleich Null ist.

20. Drucksensor nach einem der Ansprüche 1 bis 19, dadurch gekennzeichnet, daß die Trägerplatte (13) parallel zu und nahe der Trennmembran (10) in dem Druckgeber (5, 31) angeordnet ist.

21. Drucksensor nach Anspruch 20, dadurch gekennzeichnet, daß die Trennmembran (10) aus Kunststoff besteht.

22. Drucksensor nach Anspruch 21, dadurch gekennzeichnet, daß der Kunststoff Polytetrafluoräthylen ist.

23. Drucksensor nach Anspruch 22, dadurch gekennzeichnet, daß die Dicke der aus Kunststoff bestehenden Membran kleiner 100 μm beträgt.

**Revendications**

1. Capteur de pression comportant un boîtier métallique (6, 15) composé d'une chambre de compression (11), fermée, remplie d'un fluide, munie d'une membrane (10) de séparation, séparant la chambre (11) de l'environnement extérieur et transmettant sa pression sur le fluide,
– ladite chambre (11) logeant une puce-capteur de pression (14) exposée à la pression du fluide et réalisée en un matériau semi-conducteur,
– cette puce présentant un effet anisotrope piezo-resistif et des bornes (18), pénétrant dans la chambre de compression (11), électriquement isolées par rapport au boîtier (6, 15) et étanches sous la pression,

– ces bornes (18) pouvant être connectées à un circuit électrique d'analyse et à la puce par des liaisons électriques,

– ce capteur étant caractérisé par le fait qu'est prévue une plaquette support (13) en nitrure d'aluminium sur laquelle la puce-capteur de pression (14) est soudée du moins sur sa partie métallisée (21).

2. Capteur de pression selon la revendication 1 caractérisé par le fait:

– que la puce-capteur de pression (14) est, vue de dessus, de forme carrée et qu'il est prévu quatre parties métallisées (21) de dimensions équivalentes,

– que chacune de ces parties est, vue de dessus, de forme rectangulaire et,

– que les quatre parties métallisées sont disposées de manière symétrique autour d'un centre en formant une étoile.

3. Capteur de pression selon la revendication 2 caractérisé par le fait que les côtés longitudinaux de chaque partie métallique de forme rectangulaire de la plaquette support (13) sont orientés en direction du centre.

4. Capteur de pression selon la revendication 2 ou 3 caractérisé par le fait que les quatre parties (21) métallisées, de forme rectangulaire, déterminent une surface idéale de forme carrée dont les dimensions sont supérieures à celles de la puce carrée (14).

5. Capteur de pression selon la revendication 3 caractérisé par le fait que les deux directions d'extension des côtés longitudinaux (22) et des côtés étroits (23) des parties (21) métallisées de forme rectangulaire correspondent aux directions mécaniquement sans effet de la puce (14) anisotrope, montée par soudage.

6. Capteur de pression selon l'une quelconque des revendications 1 à 5 caractérisé par le fait que les quatre parties (21) métallisées se touchent.

7. Capteur de pression selon l'une quelconque des revendications 1 à 6 caractérisé par le fait que la plaquette support (13) présente des circuits conducteurs (24) destinés à être électriquement connectés à la puce (14), aux bornes (18) ainsi que le cas échéant à des résistances d'équilibrage (26) et/ou à un circuit (28) de compensation thermique.

8. Capteur de pression selon l'une quelconque des revendications 1 à 7 caractérisé par le fait que la plaquette support présente des perçages (20) disposés circulairement destinés aux bornes (18) disposées elles aussi circulairement, les dites bornes (18) faisant saillie des perçages (20) lors du montage.

9. Capteur de pression selon la revendication 8 caractérisé par le fait que les perçages sont disposés à proximité des circuits conducteurs (24).

10. Capteur de pression selon la revendication 9 caractérisé par le fait que les perçages (20) sont entièrement entourés par les circuits conducteurs (24).

11. Capteur de pression selon l'une quelconque des revendications 1 à 10 caractérisé par le fait que la plaquette support (13) est montée dans le capteur de pression (5, 31) sous la forme d'un composant fini, testé et équilibré, équipé de la puce (14) connectée au circuit d'analyse ainsi que le cas échéant de résistances d'équilibrage (26) et/ou d'un circuit (28) de compensation thermique.

12. Capteur de pression selon la revendication 11 caractérisé par le fait que le composant fini est monté sur les bornes (18), les parties débordantes des perçages (20) étant soudées sur les circuits conducteurs (24).

13. Capteur de pression selon la revendication 11 caractérisé par le fait que la plaquette support (13) est munie d'un croisillon métallique.

14. Capteur de pression selon l'une quelconque des revendications 1 à 13 caractérisé par le fait que la plaquette support (13) est de forme circulaire et présente une bordure périphérique dont la hauteur dépasse celle du capteur de pression (14).

15. Capteur de pression selon l'une quelconque des revendications 1 à 14 caractérisé par le fait que la plaquette support présente une métallisation (33) sur son côté inférieur (32) opposé à la puce (14) et qu'il a été prévu dans cette zone un orifice de passage allant du coté inférieur (32) vers le côté supérieur de la plaquette support (13).

16. Capteur de pression selon la revendication 15 caractérisé par le fait que, sur la métallisation (33) du côté inférieur (32) de la plaquette support (13) est soudée, de manière étanche au gaz et en entourant l'orifice de passage (34), une tubulure qui peut être soumise à une pression de référence.

17. Capteur de pression selon la revendication 15 caractérisé par le fait que la plaquette support (13) est soudée sur la métallisation (33) de son côté inférieur (32) sur le boîtier (6), ce soudage étant étanche au gaz et entourant l'orifice de passage (34) lequel est en liaison avec un perçage de passage (35) pratiqué dans le boîtier (6).

18. Capteur de pression selon l'une quelconque des revendications 15 à 17 caractérisé par le fait que l'orifice de passage (34) débouche sur le côté supérieur de la plaquette support (13) sous la puce (14), laquelle est soudée périphériquement sur le côté supérieur de la plaquette support (13).

19. Capteur de pression selon l'une quelconque des revendications 1 à 18 caractérisé par le fait que sur la plaquette support (13) sont disposés des corps de remplissage dont le coefficient de dilatation thermique est inférieur ou au maximum égal à zéro.

20. Capteur de pression selon l'une quelconque des revendications 1 à 19 caractérisé par le fait que la plaquette de support (13) est disposée parallèlement et à proximité de la membrane de séparation (10) placée à l'intérieur du manomètre (5, 31).

21. Capteur de pression selon la revendication 20 caractérisé par le fait que la membrane de séparation (10) est réalisée en matière plastique.

22. Capteur de pression selon la revendication 21 caractérisé par le fait que cette matière plastique est du polytétrafluoroéthylène.

23. Capteur de pression selon la revendication 22 caractérisé par le fait que l'épaisseur de la membrane en matière plastique est inférieure à 100 $\mu$m.

## Claims

1. A pressure sensor comprising a metal housing (6, 15), a closed pressure chamber (11) filled with a fluid, a separating diaphragm (10) which separates the pressure chamber (11) from the exterior and which transmits the exterior pressure to the fluid, a pressure sensor chip (14) which is arranged in the pressure chamber (11) and which is exposed to the pressure of the fluid, the pressure sensor chip comprising a semiconductor material having a piezoresistive anisotropic effect, and connections (18) which extend into the pressure chamber (11) in a pressure-tight manner and electrically insulated from the metal housing (6, 15) and which can be connected to an electrical evaluation circuit, wherein the pressure sensor chip (14) is electrically connected by bonding, characterised in that there is provided a carrier plate (13) of aluminium nitride, on which the pressure sensor chip (14) is soldered at least over a metallised region (21).

2. A pressure sensor according to claim 1, characterised in that the pressure sensor chip (14) is square in plan view and that there are provided four metallised regions (21) of the same size, that each region is rectangular in plan view and that the four metal regions are arranged in star-symmetry relationship with each other about a centre.

3. A pressure sensor according to claim 2 characterised in tnat the long sides of each rectangular metal region of the carrier plate (13) are directed towards the centre.

4. A pressure sensor according to claim 2 or claim 3 characterised in that the four rectangular metallised regions (21) extend to define a notional square area which is larger than that of the square pressure sensor chip (14).

5. A pressure sensor according to claim 3 characterised in that the two directions in which the long sides (22) and the narrow sides (23) of the rectangular metallised regions (21) extend correspond to the mechanically inoperative directions of the anisotropic pressure sensor chip (14) which is soldered thereto.

6. A pressure sensor according to claims 1 to 5 characterised in that the four metallised regions (21) are in contact with each other.

7. A pressure sensor according to one of claims 1 to 6 characterised in that the carrier plate (13) has conductor tracks (24) for electrical connection to the sensor chip (14), the conductor bars (18) and possibly balancing resistors (26) and/or a temperature compensation circuit (28).

8. A pressure sensor according to one of claims 1 to 7 characterised in that the carrier plate, for the connections (18) which are arranged in a circle, also has bores (20) which are correspondingly arranged in a circle and beyond which the connections project, when inserted.

9. A pressure sensor according to claim 8 characterised in that the bores are arranged in the region of the conductor tracks (24).

10. A pressure sensor according to claim 9 characterised in that the bores (20) are completely surrounded by conductor tracks (24).

11. A pressure sensor according to one of claims 1 to 10 characterised in that the carrier plate (13) with the pressure sensor chip (14) which is electrically connected except for the evaluation circuit and possibly balancing resistors (26) and/or a temperature compensation circuit (28) is fitted into the pressure sensor (5, 31) in the form of a finished, tested and balanced assembly component.

12. A pressure sensor according to claim 11 characterised in that the finished assembly component is fitted with the bores (20) on to the connections (18) and the projecting regions of the latter are soldered to the conductor tracks (24).

13. A pressure sensor according to claim 11 or claim 12 characterised in that the carrier plate (13) is provided with a metal spider.

14. A pressure sensor according to one of claims 1 to 13 characterised in that the carrier plate (13) is of a round configuration and has a circumferentially extending rim portion which projects beyond the height of the pressure sensor (14).

15. A pressure sensor according to one of claims 1 to 14 characterised in that the carrier plate has a metallisation portion (33) on its underside (32) which is in opposite relationship to the pressure sensor chip (14), and provided in that region is a through opening (34) which extends from the underside (32) to the top side of the carrier plate (13).

16. A pressure sensor according to claim 15 characterised in that a tube portion is gas-tightly soldered around the through opening (34) to the metallisation portion (33) on the underside (32) of the carrier plate (13), which tube portion can be acted upon by a reference pressure.

17. A pressure sensor according to claim 15 characterised in that the carrier plate (13) is gas-tightly soldered with its metallisation portion (33) at the underside (32) to the housing (6), around the through opening (34) which communicates with a through bore (35) in the housing (6).

18. A pressure sensor according to one of claims 15 to 17 characterised in that the through opening (34) opens at the top side of the carrier plate (13) under the pressure sensor chip (14) which is soldered therearound to the top side of the carrier plate (13).

19. A pressure sensor according to one of claims 1 to 18 characterised in that disposed on the carrier plate (13) are filling bodies with a thermal coefficient of expansion which is less than or at most equal to zero.

20. A pressure sensor according to one of claims 1 to 19 characterised in that the carrier plate (13) is arranged parallel to and adjacent the separating diaphragm (10) in the pressure sensor (5, 31).

21. A pressure sensor according to claim 20 characterised in that the separating diaphragm (10) comprises plastics material.

22. A pressure sensor according to claim 21 characterised in that the plastics material is polytetrafluoroethylene.

23. A pressure sensor according to claim 22 characterised in that the thickness of the diaphragm comprising plastics material is less than 100 μm.

FIG. 1

FIG. 2

FIG. 3

FIG. 4